**Europäisches Patentamt**

**European Patent Office**

**Office européen des brevets**

(11) Veröffentlichungsnummer: **0 451 621 A2**

## EUROPÄISCHE PATENTANMELDUNG

(21) Anmeldenummer: 91104853.6

(22) Anmeldetag: 27.03.91

(51) Int. Cl.5: **G02F 1/137**, G02F 1/1347, G09G 3/36

(30) Priorität: **12.04.90 DE 4011893**

(43) Veröffentlichungstag der Anmeldung:
**16.10.91 Patentblatt 91/42**

(84) Benannte Vertragsstaaten:
**AT BE CH DE DK ES FR GB GR IT LI LU NL SE**

(71) Anmelder: **Liesegang, Ed.**
**Volmerswerther Strasse 21**
**W-4000 Düsseldorf 1(DE)**

(72) Erfinder: **Reinhardt, Dieter**
**Eichelhäherweg 5**
**W-3167 Burgdorf/Ehlershausen(DE)**
Erfinder: **Müller, Paul**
**Bickhausener Str. 3**
**W-4040 Neuss 22(DE)**

(74) Vertreter: **Cohausz & Florack Patentanwälte**
**Postfach 14 01 61 Schumannstrasse 97**
**W-4000 Düsseldorf 1(DE)**

(54) Flüssigkristallzellenanordnung.

(57) Die Erfindung betrifft eine Flüssigkristallzellenanordnung, die aus mindestens zwei Flüssigkristallzellen LCD1,LCD3 und aus einer Anzahl von Polarisatoren P1,P2,P3,P4 besteht, deren Anzahl um eins höher ist als die Anzahl der Flüssigkristallzellen. Polarisatoren und Flüssigkristallzellen sind im Strahlengang einer Lichtquelle derart hintereinander angeordnet, daß sich Polarisatoren und Flüssigkristallzellen abwechseln, wobei durch die separate elektrische Ansteuerung der einzelnen Flüssigkristallzellen am Ausgang der Flüssigkristallanzeige Licht in vorgebbaren Farbwerten erzeugbar ist. Dadurch, daß zwei Flüssigkristallzellen LCD1 und LCD3 verwendet werden, mittels der die Polarisationsebene des durchtretenden Lichtstrahls bezüglich seines roten und grünen Spektralanteils bei elektrischer Ansteuerung um etwa 90° verdrehbar ist, und drei Polarisatoren P1,P2,P4 vorgesehen sind, wobei der erste Polarisator P1 ein Grünfilter, der zweite Polarisator P2 ein Graufilter und der dritte Polarisator P4 ein Rotfilter ist, läßt sich der Aufwand zur Herstellung der Zellenanordnung deutlich herabsetzen, da ausschließlich Standardbauelemente verwendet werden.

Fig. 1

Die Erfindung betrifft eine Flüssigkristallzellenanordnung bestehend aus mindestens zwei elektrisch ansteuerbaren Flüssigkristallzellen und aus einer Anzahl von Polarisatoren, die um eins größer ist als die Anzahl der Flüssigkristallzellen, wobei die Flüssigkristallzellen und die Polarisatoren im Strahlengang einer Lichtquelle derart hintereinander angeordnet sind, daß sich Polarisatoren und Flüssigkristallzellen abwechseln, wobei durch die separate elektrische Ansteuerung der einzelnen Flüssigkristallzellen Licht mit vorgebbaren Farbwerten erzeugbar ist.

Darüber hinaus betrifft die Erfindung die Verwendung einer Flüssigkristallzellenanordnung für eine optische Projektionseinrichtung, beispielsweise als Projektionsauflage auf einem Schreibprojektor oder in einem Videoprojektor.

Eine Flüssigkristallzellenanordnung der eingangs genannten Art ist aus der DE-OS 20 46 566 bekannt. Eine solche Anordnung, die aus drei hintereinander angeordneten Flüssigkristallzellen und vier abwechselnd dazu angeordneten Polarisatoren besteht, ermöglicht, aus eingestrahlten weißem Licht durch subtraktive Farbmischung eine beliebige Farbe des sichtbaren Spektrums einschließlich weiß und schwarz zu erzeugen. Die in der bekannten Anordnung vorgesehenen Flüssigkristallzellen sind dabei hinsichtlich ihrer molekularen Struktur so gestaltet, daß sie jeweils von cyanblau, magentarot beziehungsweise gelb im nicht angesteuerten Zustand in den Farbwert farblos (durchsichtig) durch Anlegen einer elektrischen Spannung gesteuert werden können. Hierdurch wird das auf die Flüssigkristallzellenanordnung einfallende weiße Licht je nach Zustand der Flüssigkristallzellen (angesteuert oder nicht angesteuert) in buntes Licht vorbestimmbarer Farbwerte verändert. Ein vollständiges Farbwiedergabesystem läßt sich dadurch erreichen, daß die bekannte Flüssigkristallzellenanordnung mit Leitern in Form eines Kreuzgitters versehen wird, wodurch einzelne getrennt ansteuerbare Flächenelemente gebildet werden, die voneinander unterschiedliche Farbwerte erzeugen können.

Wenn bei der bekannten Anordnung die drei Flüssigkristallzellen jeweils zwischen den Farben gelb, magenta beziehungsweise cyan im ausgestalteten Zustand und weiß im eingeschalteten Zustand umschaltbar sind, ist es erforderlich, daß die Polarisatoren in der bekannten Anordnung an die Farben gelb, magenta, rot und cyan angepaßt sind, so daß sich das gesamte Farbspektrum von rot bis blau und seinen Mischfarben und den Farben schwarz und weiß erzeugen läßt. Eine solche Anordnung ist hinsichtlich ihrer Gestaltung aufwendig, da sowohl die Polarisatoren untereinander auf das jeweilige Spektrum angepaßt sein müssen und andererseits die Zuordnung der Polarisatoren zu den jeweiligen Flüssigkristallzellenelementen und die Zuordnung der Flüssigkristallzellenelemente untereinander spektral abgestimmt sein muß.

Andererseits ist es aus der DE-OS 26 20 015 bekannt, einzelne Flüssigkristallzellen im parallelen Strahlengang eines Lichtstrahls anzuordnen, um die vom Durchstrahlungswinkel abhängigen physikalischen Eigenschaften der Flüssigkristallzelle, das heißt, den Kontrast und den Spektralverlauf der Transmission, zu kompensieren.

Der Erfindung liegt die Aufgabe zugrunde, eine Anordnung der eingangs genannten Art derart weiterzuentwickeln, daß sie hinsichtlich ihres Herstellungsaufwandes vereinfacht wird.

Diese Aufgabe wird erfindungsgemäß dadurch gelöst, daß zwei Flüssigkristallzellen, mittels der die Polarisationsebene des durchtretenden Lichtstrahls bezüglich seines roten und grünen Spektralanteils bei elektrischer Ansteuerung um etwa 90° verdrehbar ist, und drei Polarisatoren vorgesehen sind, wobei der erste Polarisator ein Polarisator für grünes Licht, der zweite Polarisator ein farbneutraler Polarisator und der dritte Polarisator ein Polarisator für rotes Licht ist.

Die Erfindung zeichnet sich dadurch aus, daß Flüssigkristallzellen Einsatz finden können, welche zum einen identisch sind und zum anderen als Standardprodukt auf dem Markt erhältlich sind. Eine Abstimmung der Flüssigkristallzellen hinsichtlich ihrer spektralen Eigenschaften kann daher entfallen. Erfindungsgemäß werden Flüssigkristallzellenelemente verwendet, die als sogenannte "Blue Mode"-LCDs verfügbar sind. In der Kombination mit den zugeordneten Polarisatoren schaltet die erste Flüssigkristallzelle zwischen den Farben magenta, das heißt, der Grünanteil des Spektrums ist ausgeblendet, und weiß, während die zweite Flüssigkristallzelle zwischen den Farben cyan, das heißt, der Rotanteil des Spektrums ist ausgeblendet, und weiß schaltet. Durch ein solches System ist eine Darstellung der Farben weiß, magenta, rot und cyan sowie deren Mischfarben möglich.

Vorzugsweise ist erfindungsgemäß vorgesehen, daß eine dritte, zwischen den beiden ersten Flüssigkristallzellen angeordnete Flüssigkristallzelle, die im nicht angesteuerten Zustand die Polarisationsebene im blauen Spektralbereich um 90° dreht und im angesteuerten Zustand durchsichtig ist, und als vierter Polarisator ein weiterer farbneutraler Polarisator vorgesehen ist, wobei die beiden farbneutralen Polarisatoren benachbart zur dritten Flüssigkristallzelle angeordnet sind. Hierdurch wird ermöglicht, daß zusätzlich auch die Farben grün, blau, gelb und schwarz erzeugt werden können, so daß das ganze Spektrum abgedeckt ist. Die weitere Flüssigkristallzelle dreht im ausgeschalteten Zustand die Polarisationsebene des eingestrahlten Lichtes im blauen Spektralbereich um 90°,während

im übrigen Spektralbereich die Polarisationsebene nicht oder nur geringfügig gedreht wird. Im eingeschalteten Zustand ist die Zelle ohne wellenlängenabhängige Drehung der Polarisationsebene im gesamten Spektralbereich durchsichtig. In der Kombination mit den farbneutralen Polarisatoren schaltet die dritte Flüssigkristallzelle somit zwischen den Farben gelb, das heißt, der Blauanteil des Spektrums ist ausgeschaltet, und weiß.

Wenn gemäß einer weiteren bevorzugten Ausführungsform die farbneutralen Polarisatoren einen hohen Polarisationsgrad, vorzugsweise über 99 % haben, wird eine gute Farbsättigung erreicht.

Für sämtliche Polarisatoren sollten vorzugsweise solche verwendet werden, die das Licht linear polarisieren.

Wenn die Polarisationsebene des der dritten Flüssigkristallzelle vorgeordneten Polarisators um einen bestimmten Winkel, insbesondere von 30 oder 45°, gegenüber der Orientierungsebene der Flüssigkristalle geneigt ist, ergibt sich ein besonders hoher Farbkontrast. Hierzu ist es zweckmäßig, den der mittleren Flüssigkristallzelle vorgeordneten Polarisator unter einem Winkel von 30 oder 45° zur Orientierungsebene der Flüssigkristalle anzuordnen, wobei sich die Orientierungsebene durch eine geeignete Trägerschicht an der inneren Glasoberfläche der Flüssigkristallzelle ergibt. Durch Ausrichtung des der mittleren Flüssigkristallzelle nachgeordneten farbneutralen Polarisators unter einem Winkel von ungefähr 90° zum vorgeordneten farbneutralen Polarisator läßt sich zunächst die Kombination aus der mittleren Flüssigkristallzelle und den ihr zugeordneten Polarisatoren auf größtmöglichen Kontrast zwischen gelb und weiß optimieren. Im Anschluß daran können dann die Winkel optimiert werden, welche die äußeren Polarisatoren, das heißt, die Rot- beziehungsweise Grünfilter gegenüber den farbneutralen Polarisatoren bilden, so daß sich hierdurch ein größtmöglicher Kontrast im magentaroten und cyanblauen Spektralbereich ergibt.

Die Ansteuerung der Flüssigkristallzellen kann gemäß einer weiteren bevorzugten Ausführungsform der Erfindung im Zeitmultiplexbetrieb erfolgen. Hierdurch lassen sich zum einen beliebige Zwischenfarben erzeugen oder zum anderen eine verringerte Lichtintensität erreichen.

Eine bevorzugte Anwendung findet die erfindungsgemäße Flüssigkristallzellenanordnung in einer optischen Projektionseinrichtung.

Eine solche Projektionseinrichtung ist vorzugsweise so aufgebaut, daß der Flüssigkristallzellenanordnung eine Lichtquelle mit einem Kondensor vorgeordnet und eine Abbildungsoptik nachgeordnet ist. Hierdurch ist gewährleistet, daß im Bereich der Flüssigkristallzellenanordnung paralleles Licht vorliegt, so daß eine mit den Flüssigkristallzellen dargestellte Abbildung deckungsgleich für die drei durch die einzelnen Flüssigkristallzellen gebildeten Farbauszüge abgebildet wird.

Hierzu kann zusätzlich zu dem Kondensor beziehungsweise der Abbildungsoptik noch ein Linsensystem Verwendung finden, welches aus einer der Flüssigkristallzellenanordnung vorgeordneten Linse negativer Brennweite und einer ihr nachgeordneten Linse positiver Brennweite besteht.

Für eine bestimmte Anwendung, wenn nämlich die Flüssigkristallzellenanordnung als Projektionsauflage auf einem Schreibprojektor verwendet werden soll, ist es zweckmäßig, die beiden Linsen als Fresnel-Linsen auszubilden.

Wenn in einer anderen Anwendungsart die Flüssigkristallzellenanordnung in einem Videoprojektor Verwendung findet, werden zweckmäßigerweise die eine vorgeordnete Linse mit dem Kondensor und die andere nachgeordnete Linse mit der Abbildungsoptik jeweils so zusammengefaßt, daß sie jeweils ein gemeinsames System bilden.

Allen Anwendungen ist gemeinsam, daß die Flüssigkristallzellen jeweils im parallelen Strahlengang angeordnet sind.

Die Erfindung wird im folgenden anhand einer zwei Ausführungsbeispiele darstellenden Zeichnung näher erläutert.

Dabei zeigen:

Figur 1 eine räumliche Anordnung von vier Polarisatoren und drei Flüssigkristallzellen gemäß der Erfindung **und**

Figur 2 eine Anordnung der Flüssigkristallzellenanordnung nach Figur 1 im parallelen Strahlengang eines optischen Projektionssystems.

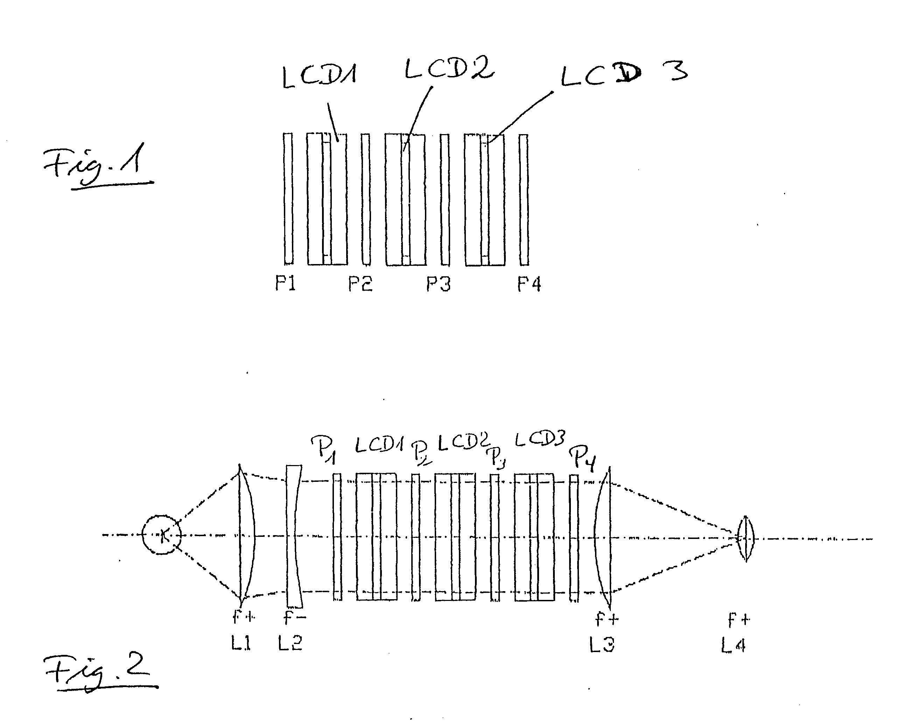

Unter Bezugnahme auf Figur 1 ist die räumliche Anordnung von vier Polarisatoren P1-P4 und drei Flüssigkristallzellen LCD1-3 so gewählt, daß sich Polarisatoren und Flüssigkristallzellen abwechseln. Ein Lichtstrahl trifft zunächst auf den Polarisator P1, durchtritt dann abwechselnd die nachgeordneten Flüssigkristallzellen beziehungsweise Polarisatoren und tritt anschließend in der gewünschten vorgebbaren Farbe am Polarisator P4 aus.

Der Polarisator P1 ist vom magentarot-Typ, das heißt, er polarisiert grünes Licht und läßt Licht der Farben rot + blau = magenta unpolarisiert hindurch. Die Polarisatoren P2 und P3 sind farbneutrale graue Polarisatoren, die im sichtbaren Licht keinen nennenswerten Spektralverlauf der Polarisation besitzen. Zur Erzielung einer guten Farbsättigung werden für die Polarisatoren P2 und P3 bevorzugt Polarisatoren mit hohem Polarisationsgrad über 99 % verwendet.

Der Polarisator P4 ist vom cyanblau-Typ, das heißt, er polarisiert rotes Licht und läßt Licht der Farben blau + grün = cyan unpolarisiert hindurch.

Die Flüssigkristallzellen 1 und 3 sind identische Zellen. Durch Anlegen einer elektrischen Spannung lassen sich ihre optischen Transmissionseigenschaften verändern. Im rot-grünen Spektralbereich wird die Polarisationsebene des eingestrahlten Lichtes um ca. 90° gedreht, während sie im blauen Spektralbereich nicht oder nur unwesentlich verändert wird, falls die Zelle nicht angesteuert wird. Wenn die Zelle angesteuert wird, wird die Polarisationsebene im gesamten Spektralbereich nicht oder nur geringfügig gedreht.

In der Kombination mit den Polarisatoren 1 und 2 ist die Flüssigkristallzelle LCD1 somit zwischen den Farben magenta, bei der der Grünanteil des Spektrums ausgeschaltet ist, und weiß umschaltbar, während die Flüssigkristallzelle 3 in Kombination mit den Polarisatoren 3 und 4 zwischen den Farben cyan, bei der der Rotanteil des Spektrums ausgeschaltet ist, und weiß umschaltbar ist.

Die zwischen den identischen Flüssigkristallzellen 1 und 3 angeordnete Flüssigkristallzelle 2 dreht im nicht angesteuerten Zustand die Polarisationsebene des eingestrahlten Lichtes im blauen Spektralbereich um 90°,während im übrigen Spektralbereich die Polarisationsebene nicht oder nur geringfügig gedreht wird. Im angesteuerten Zustand ist die Zelle durchsichtig, weil keine wellenlängenabhängige Drehung der Polarisationsebene erfolgt. In Kombination mit den Polarisatoren 2 und 3 schaltet die Flüssigkristallzelle 2 somit zwischen den Farben gelb, das heißt, der Blauanteil des Spektrums ist ausgeschaltet, und weiß.

Durch die geeignete elektrische Ansteuerung der drei Flüssigkristallzellen 1 bis 3 läßt sich somit das gesamte Farbspektrum von rot bis blau einschließlich seiner Mischfarben und den Farben schwarz und weiß erzeugen.

Die Polarisatoren der beschriebenen Anordnung erzeugen linear polarisiertes Licht.

Da die Ansteuerung der Flüssigkristallzellenelemente im Zeitmultiplexbetrieb erfolgt, kann das erzeugte Farbbild auch hinsichtlich seiner Intensität moduliert werden. Der Polarisator 2 ist unter einem Winkel von etwa 45° zur Orientierungsebene der Flüssigkristalle in der Flüssigkristallzelle LCD2 angeordnet. Durch Ausrichtung des Polarisators P3 in einem Winkelbereich in der Nähe von 90° zum Polarisator P2 wird bei der Einjustierung der Flüssigkristallzellenanordnung die Kombination aus LCD2 und P2,P3 so eingestellt, daß sich ein größtmöglicher Kontrast zwischen gelb und weiß, das heißt, den beiden Schaltzuständen der Zelle LCD2 ergibt. Im Anschluß daran werden die Polarisationswinkel der Polarisatoren 1 und 4 in bezug auf die Polarisatoren 2 und 3 so eingestellt, daß sich ein größtmöglicher Kontrast im magentaroten beziehungsweise cyanblauen Spektralbereich ergibt.

Figur 2 zeigt den Einsatz der in Figur 1 beschriebenen Flüssigkristallzellenanordnung in einem optischen Projektionssystem. Der aus einer im linken Bereich der Figur 2 dargestellten Lichtquelle austretende Lichtstrahl wird zunächst mittels eines Kondensors L1 mit einer positiven Brennweite gebündelt und auf eine Linse L2 mit negativer Brennweite geworfen. Das aus der Linse L2 austretende Licht durchsetzt in Form paralleler Lichtstrahlen die in Figur 1 beschriebene Anordnung und tritt am Polarisationsfilter P4 aus und in eine weitere Sammellinse positiver Brennweite L3 ein, welche den Lichtstrahl auf eine Abbildungsoptik L4 lenkt.

Dadurch, daß die Flüssigkristallzellen im parallelen Strahlengang des aus der Lichtquelle austretenden im Normalfall weißen Lichtes liegen, wird in der Projektion ein deckungsgleiches Bild für die drei von den einzelnen Flüssigkristallzellen gebildeten Farbauszüge abgebildet.

Wenn die Flüssigkristallzellenanordnung nachträglich in ein bestehendes Projektionssystem eingefügt wird, zum Beispiel als Projektionsauflage auf einem Schreibprojektor, so ist es zweckmäßig, die Linsen L2 und L3 als Fresnel-Linsen auszubilden. Bei fester Anordnung, zum Beispiel in einem Videoprojektor, bilden die Linsen L1 und L2 beziehungsweise die Linsen L3 und L4 zweckmäßigerweise jeweils ein gemeinsames Linsensystem, so daß auch hier die Flüssigkristallzellen ebenfalls im parallelen Strahlengang angeordnet sind.

Eine Vereinfachung der dargestellten Anordnung besteht darin, auf die mittlere LCD-Zelle und einen der innenliegenden neutralen Polarisatoren P2 oder P3 zu verzichten. Auf diese Weise entsteht ein System aus magentarot-Polarisator P1, erster Flüssigkristallzelle LCD1, Neutralpolarisator P2 oder P3, zweiter Flüssigkristallzelle LCD3 und dem cyanblau-Polarisator P4.

Dieses System gestattet die Darstellung eine Untermenge des Farbspektrums, nämlich der Farben weiß, magenta, rot und cyan, bei geeigneter Ansteuerung auch der Mischfarben davon. Bei gedrehter Anordnung der Polarisatoren in bezug auf die Orientierungsachse der Flüssigkristalle lassen sich auch davon abweichende Farben erzeugen. Diese Anordnung besitzt den Vorteil, daß sie ausschließlich aus standardmäßig verfügbaren Flüssigkristallzellen besteht.

**Patentansprüche**

1. Flüssigkristallzellenanordnung bestehend aus mindestens zwei elektrisch ansteuerbaren Flüssigkristallzellen (LCD1,LCD2,LCD3) und aus einer Anzahl von Polarisatoren (P1-P4), die um eins größer ist als die Anzahl der Flüssigkristallzellen (LCD1-3), wobei die Flüssigkristallzellen und die Polarisatoren im Strahlengang einer Lichtquelle derart hintereinander angeordnet sind, daß sich Polarisatoren (P1-P4) und Flüssigkristallzellen (LCD1-LCD3) abwechseln und wobei durch die separate elektrische Ansteuerung der einzelnen Flüssigkristallzellen (LCD1-LCD3) Licht mit vorgebbaren Farbwerten erzeugbar ist, **dadurch gekennzeichnet,** daß zwei Flüssigkristallzellen (LCD1,LCD3), mittels der die Polarisationsebene des durchtretenden Lichtstrahls bezüglich seines roten und grünen Spektralanteils bei elektrischer Ansteuerung um etwa 90° verdrehbar ist, und drei Polarisatoren (P1,P2,P4) vorgesehen sind, wobei der erste Polarisator (P1) ein Polarisator für grünes Licht, der zweite Polarisator (P2) ein farbneutraler Polarisator und der dritte Polarisator (P4) ein Polarisator für rotes Licht ist.

2. Flüssigkristallzellenanordnung nach Anspruch 1,
   **dadurch gekennzeichnet,** daß eine dritte zwischen den beiden ersten Flüssigkristallzellen angeordnete Flüssigkristallzelle (LCD2), die im nicht angesteuerten Zustand die Polarisationsebene im blauen Spektralbereich um 90° dreht und im angesteuerten Zustand durchsichtig ist, und als vierter Polarisator (P3) ein weiterer farbneutraler Polarisator vorgesehen ist, wobei die beiden farbneutralen Polarisatoren (P2,P3) benachbart zur dritten Flüssigkristallzelle (LCD2) angeordnet sind.

3. Flüssigkristallzellenanordnung nach einem der Ansprüche 1 bis 2,
   **dadurch gekennzeichnet,** daß der Polarisationsgrad der beiden farbneutralen Polarisatoren (P2,P3) größer ist als 99 %.

4. Flüssigkristallzellenanordnung nach einem der Ansprüche 1 bis 3,
   **dadurch gekennzeichnet,** daß die Polarisatoren (P1-P4) lineare Polarisatoren sind.

5. Flüssigkristallzellenanordnung nach einem der Ansprüche 1 bis 4,
   **dadurch gekennzeichnet,** daß die Polarisationsebene des der dritten Flüssigkristallzelle (LCD2) vorgeordneten Polarisators (P2) um einen Winkel von insbesondere 30° oder 45° gegenüber der Orientierungsebene der Flüssigkristalle in der Zelle geneigt ist.

6. Flüssigkristallzellenanordnung nach einem der Ansprüche 1 bis 5,
   **dadurch gekennzeichnet,** daß die Ansteuerung der Flüssigkristallzellen (LCD1-3) im Zeitmultiplexbetrieb erfolgt.

7. Verwendung einer Flüssigkristallzellenanordnung nach einem der Ansprüche 1 bis 6 in einer optischen Projektionseinrichtung.

8. Projektionseinrichtung unter Verwendung einer Flüssigkristallzellenanordnung nach einem der Ansprüche 1 bis 6,
   **dadurch gekennzeichnet,** daß der Flüssigkristallzellenanordnung eine Lichtquelle mit einem Kondensor (L1) vorgeordnet und eine Abbildungsoptik (L4) nachgeordnet ist.

9. Projektionseinrichtung nach Anspruch 8,
   **dadurch gekennzeichnet,** daß die Flüssigkristallzellenanordnung zusätzlich von einer Linse negativer Brennweite (L2) und einer weiteren Linse positiver Brennweite (L3) zur Erzeugung eines parallelen Strahlenganges umgeben ist.

10. Projektionseinrichtung nach einem der Ansprüche 8 oder 9,
    **dadurch gekennzeichnet,** daß die Linsen (L2,L3) Fresnel-Linsen sind.

11. Projektionseinrichtung nach einem der Ansprüche 8 bis 10,
    **dadurch gekennzeichnet,** daß die eine Linse (L2) gemeinsam mit dem Kondensor (L1) und die weitere Linse (L3) gemeinsam mit der Abbildungsoptik (L4) jeweils ein einstückiges Linsensystem bilden.

Fig.1

Fig.2